# EUROPÄISCHE PATENTSCHRIFT

(11) **EP 1 926 620 B1**
(45) Veröffentlichungstag und Bekanntmachung des Hinweises auf die Patenterteilung: **23.03.2016**
(21) Anmeldenummer: 06793018.0
(22) Anmeldetag: 25.08.2006
(51) Int. Cl.: B60K 6/44

(54) **ANTRIEBSSYSTEM FÜR EIN FAHRZEUG UND EIN LANDWIRTSCHAFTLICHES NUTZFAHRZEUG**
DRIVE SYSTEM FOR A VEHICLE, AND AGRICULTURAL VEHICLE
SYSTEME D'ENTRAINEMENT POUR VEHICULE, ET VEHICULE UTILITAIRE AGRICOLE

(30) Priorität: 15.09.2005 DE 102005044181
(43) Veröffentlichungstag der Anmeldung: 04.06.2008
(73) Patentinhaber: Deere & Company, Moline, IL 61265 (US)
(72) Erfinder: GLASER, Fritz, 66482 Zweibrücken (DE); TARASINSKI, Nicolai, 67227 Frankenthal (DE); GUGEL, Rainer, 68163 Mannheim (DE)
(74) Vertreter: Holst, Sönke
(86) Internationale Anmeldenummer: PCT/EP2006/065687
(87) Internationale Veröffentlichungsnummer: WO 2007/031396

(56) Entgegenhaltungen:
- EP-A2- 1 547 840
- DE-A1- 19 749 074
- FR-A- 2 419 832
- US-A- 5 224 563
- US-A1- 2003 205 422
- US-A1- 2005 109 549

## Beschreibung

Die vorliegende Erfindung betrifft ein Antriebssystem für ein landwirtschaftliches oder industrielles Nutzfahrzeug, vorzugsweise für einen Traktor. Des Weiteren betrifft die vorliegende Erfindung ein landwirtschaftliches Nutzfahrzeug mit einem solchen Antriebssystem.

Elektrische Antriebe sind bei Eisenbahn und Straßenbahn Stand der Technik. Im Fahrzeugbereich haben sich die elektrischen Fahrantriebe noch nicht durchgesetzt. Die Vorteile eines elektrischen Antriebs liegen in dem stufenlosen Antrieb über einen großen Geschwindigkeitsbereich. Ein Elektromotor kann seine maximale Leistung nur über ein Drehmomentverhältnis von maximalem zu minimalem Moment (MAXM/MINM) von etwa 5 bis 7 übertragen. Bei einem landwirtschaftlichen Nutzfahrzeug, insbesondere bei einem Traktor, wird ein Drehmomentverhältnis MAXM/MINM von etwa 25 benötigt. Ziel ist, stets die volle Nennleistung des Motors des Traktors übertragen zu können und einen Antrieb mit möglichst wenig mechanischen GetriebeSchaltstufen für den Antriebsbereich zu erhalten. Außerdem soll der Traktor im Teillastbereich den optimalen Betriebspunkt des Motors mit geringem Kraftstoffverbrauch nutzen. Außer einem stufenlosen Fahrantrieb wird auch ein stufenloser Antrieb der Zapfwelle gewünscht.

Den Stand der Technik nach dem Oberbegriff des Anspruchs 1 stellt hier die EP EP1547840A2. Der vorliegenden Erfindung liegt daher die Aufgabe zugrunde, ein Antriebssystem und ein landwirtschaftliches Nutzfahrzeug der eingangs genannten Art anzugeben und weiterzubilden, durch welches die vorgenannten Probleme überwunden werden. Insbesondere sollen elektrische Antriebskomponenten mit einer optimierten Kombination von Getrieben zu verbinden, um optimierte Antriebseigenschaften zu erhalten.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Gemäss einer Ausführungsform umfasst ein Antriebssystem der eingangs genannten Art mindestens einen elektrischen Generator und eine erste und eine zweite elektrische Maschine. Mit einem von einem Motor des Fahrzeugs erzeugten Drehmoment ist der mindestens eine elektrische Generator antreibbar. Mit der vom elektrischen Generator erzeugten elektrischen Energie ist mindestens eine der beiden elektrischen Maschinen antreibbar. Das von der ersten und/oder der zweiten elektrischen Maschine erzeugte mechanische Drehmoment ist auf mindestens eine Antriebsachse des Fahrzeugs zu dessen Fortbewegung übertragbar.

Da ein elektrischer Antrieb einen stufenlosen Antrieb über einen großen Geschwindigkeitsbereich ermöglicht, ist zunächst erkannt worden, dass insbesondere ein stufenloser Fahrantrieb realisiert werden kann, wenn beispielsweise in einem Betriebsmodus des Nutzfahrzeugs lediglich die erste elektrische Maschine ihr erzeugtes mechanisches Drehmoment auf die Antriebsachse des Fahrzeugs zu dessen Fortbewegung überträgt. In einem anderen Betriebsmodus des Nutzfahrzeugs könnte dann sowohl die erste als auch die zweite elektrische Maschine das erzeugte mechanische Drehmoment summiert auf die Antriebsachse des Fahrzeugs zu dessen Fortbewegung übertragen. Hierdurch kann in ganz besonders vorteilhafter Weise ein stufenloser Fahrantrieb auch ohne Verwendung eines stufenlosen Getriebes realisiert werden. Es könnte vorgesehen sein, ein Getriebe mit wenigen Getriebeschaltstufen zwischen die zwei elektrischen Maschinen und die Antriebsachse zu schalten, um die von den elektrischen Maschinen erzeugten Drehzahlen auf aktuell benötigte Drehzahlen der Antriebsachse bzw. der Antriebsräder des Nutzfahrzeugs wandeln zu können.

Aus dem Stand der Technik sind Antriebssysteme bekannt, bei welchen jeweils ein Rad mit einer elektrischen Maschine angetrieben wird. Hierfür sind insbesondere bei Traktoren diese elektrischen Maschinen bezüglich ihrer maximal abgebbaren Leistung überzudimensionieren, damit eventuell auftretende Belastungsspitzen bewältigt werden können. Mit dem Konzept des Antriebssystems kann in ganz besonders vorteilhafter Weise eine solche Überdimensionierung der elektrischen Maschinen vermieden werden, da die Räder einer Achse und/oder die Räder von zwei Achsen mit einer oder mit zwei elektrischen Maschinen einzeln oder miteinander gekoppelt antreibbar sind und dementsprechend durch die Auswahl der bzw. den zum Fahrantrieb eingesetzten elektrischen Maschinen eine geeignete Dimensionierung der auftretenden Antriebsleistung auch bei Belastungsspitzen eines Fahrzeugs bereitgestellt werden kann.

Da elektrische Maschinen grundsätzlich schnell und präzise geregelt werden können, ist hierdurch auch die Geschwindigkeit des Nutzfahrzeugs in ganz besonders vorteilhafter Weise stufenlos regelbar. Ein Reversieren (d.h. insbesondere von einer Vorwärtsfahrt des Nutzfahrzeugs unmittelbar in eine Rückwärtsfahrt umschalten) ist durch den Einsatz elektrischer Maschinen einerseits stufenlos und andererseits ohne mechanische Getriebeschaltungen möglich, was die Einsatzfähigkeit eines Nutzfahrzeugs mit einem Antriebssystem erheblich steigert. Die maximale Rückwärtsfahrtgeschwindigkeit des Nutzfahrzeugs kann grundsätzlich genauso hoch sein wie die maximale Vorwärtsfahrtgeschwindigkeit, könnte jedoch aus Sicherheitsgründen auf beispielsweise 30 km/h zu beschränken sein.

Einzelne Elektrokomponenten, wie beispielsweise einer der zwei Generatoren oder eine elektrische Maschine oder weitere Hilfsaggregate, können zur Verlustminimierung abgeschaltet werden, insbesondere im Teillastbereich des Nutzfahrzeugs oder beim Abschleppen eines defekten Nutzfahrzeugs. Vorhandene Kupplungen können die Räder von dem Antriebssystem trennen. Weiterhin kann die Höchstgeschwindigkeit des Nutzfahrzeugs auch ohne höchste Drehzahl des Motors erreicht werden, und zwar indem die vom Motor abgegebene mechanische Energie von dem mindestens einen elektrischen Generator in elektrische Energie umgewandelt wird und mit Hilfe dieser elektrischen Energie die erste und/oder die zweite elektrische Maschine mit einer hierzu geeigneten Drehzahl angetrieben wird. Das Antriebssystem ermöglicht eine getrennte und unabhängige Ansteuerung der Drehzahl des Motors von der elektrischen Maschine beziehungsweise eine getrennte und unabhängige Ansteuerung der Drehzahl des Motors von den Drehzahlen der elektrischen Maschinen, also ein Entkoppeln der Motoreinstellung von der erzielbaren Nutzfahrzeuggeschwindigkeit.

Unter Verwendung einer gemeinsamen Steuer- und/oder Regeleinheit für den Motor, den mindestens einen elektrischen Generator und die zwei elektrischen Maschinen kann ein Antriebs-Leistungsmanagement für das Nutzfahrzeug realisiert werden, welches in der Lage ist, schnell auf Belastungsveränderungen des Nutzfahrzeugs zu reagieren, und mit welchem ein minimierter Energie- bzw. Kraftstoffverbrauch zumindest in den am häufigsten vorgesehenen Betriebsmodi des Nutzfahrzeugs erzielbar ist.

Gemäß einer ganz besonders bevorzugten Ausführungsform ist die mindestens eine Antriebsachse des Fahrzeugs lediglich von der ersten und/oder von der zweiten elektrischen Maschine mechanisch antreibbar. Es ist also gemäß dieser Ausführungsform explizit nicht vorgesehen, die Antriebsachse des Nutzfahrzeugs mechanisch unmittelbar durch den Motor anzutreiben. Im Konkreten könnte das Antriebssystem des Fahrzeugs derart konfiguriert sein, dass eine Antriebsachse (beispielsweise die Hinterachse) des Fahrzeugs lediglich von einer elektrischen Maschine antreibbar ist und dass eine andere Antriebsachse (beispielsweise die Vorderachse) des Fahrzeugs lediglich von der anderen elektrischen Maschine antreibbar ist. Hierzu könnte bevorzugt in dem Antriebssystem ein mehrstufiges mechanisches Getriebe zwischengeschaltet sein, mit welchem entsprechende Drehmomentverbindungen zwischen der einen elektrischen Maschine und der ersten Antriebsachse sowie zwischen der anderen elektrischen Maschine und der weiteren Antriebsachse herstellbar sind. Hierdurch können in ganz besonders vorteilhafter Weise die Räder der Vorderachse mit einer anderen Radumfangsgeschwindigkeit als die Räder der Hinterachse betrieben werden, so dass beispielsweise der Wendekreis eines mit einem Antriebssystem ausgestatteten Traktors am Vorgewende durch eine entsprechende Erhöhung des Vorlaufs der Räder der Vorderachse verkleinert werden kann (Pull in Turn). Alternativ hierzu sind die beiden Antriebsachsen des Fahrzeugs lediglich von der ersten und der zweiten elektrischen Maschine antreibbar. Dies könnte ebenfalls über ein zwischen die zwei elektrischen Maschinen und die zwei Antriebsachsen zwischengeschaltetes mehrstufiges mechanisches Getriebe erfolgen, wobei das Getriebe derart ausgebildet ist, dass entsprechende Drehmomentverbindungen herstellbar sind. Hierdurch sind die Räder beider Achsen (z.B. der Vorderachse und der Hinterachse) eines mit einem Antriebssystem ausgestatteten Fahrzeugs mit gleicher Radumfangsgeschwindigkeit antreibbar.

Für landwirtschaftliche Nutzfahrzeuge und insbesondere für Traktoren kann eine günstige Konfiguration des Antriebssystems dann erreicht werden, wenn die erste und die zweite elektrische Maschine im Wesentlichen eine vergleichbare maximal abgebbare mechanische Leistung bzw. eine vergleichbare Leistungscharakteristik aufweist. Mit anderen Worten könnten zwei identische elektrische Maschinen eingesetzt werden. Falls zwei elektrische Generatoren vorgesehen sind, könnte in vergleichbarer Weise der erste und der zweite elektrische Generator im Wesentlichen eine vergleichbare maximal abgebbare elektrische Leistung bzw. eine vergleichbare Leistungscharakteristik aufweisen.

Ganz besonders bevorzugt ist das von der ersten und/oder der zweiten elektrischen Maschine erzeugte mechanische Drehmoment auf ein mehrstufiges mechanisches Getriebe übertragbar. Mit dem mehrstufigen Getriebe ist mechanisches Drehmoment auf mindestens eine Antriebsachse des Fahrzeugs abgebbar. Mit anderen Worten ist bezüglich des Drehmomentflusses zwischen den zwei elektrischen Maschinen und der Antriebsachse das mehrstufige mechanische Getriebe zwischengeschaltet. Bei der Antriebsachse des Nutzfahrzeugs handelt es sich bevorzugt um die Hinterachse.

Im Konkreten weist das Getriebe eine erste Eingangsschnittstelle auf, welche insbesondere in Form einer Eingangswelle ausgebildet ist. Die erste elektrische Maschine umfasst eine erste Abtriebswelle, welche mit der ersten Eingangsschnittstelle des Getriebes verbunden ist. Das Getriebe weist eine zweite Eingangsschnittstelle auf, welche insbesondere in Form einer Eingangswelle ausgebildet ist. Die zweite elektrische Maschine umfasst eine zweite Abtriebswelle, welche mit der zweiten Eingangsschnittstelle des Getriebes verbunden ist. Somit kann mit der ersten elektrischen Maschine erzeugtes mechanisches Drehmoment über die erste Eingangsschnittstelle auf das Getriebe übertragen werden. Gleiches trifft für die zweite elektrische Maschine und die zweite Eingangsschnittstelle des Getriebes zu.

Da die Drehzahlen der zwei elektrischen Maschinen derart ansteuerbar sind, dass unmittelbar eine synchrone Leistungssummierung bei gleichen Drehzahlen der zwei elektrischen Maschinen erfolgen kann, ist ganz besonders bevorzugt vorgesehen, dass die erste Abtriebswelle der ersten elektrischen Maschine - beispielsweise mittels einer Kupplung - mit der zweiten Abtriebswelle der zweiten elektrischen Maschine kuppelbar ist. Dies kann insbesondere mit einer direkten Kupplungsverbindung zwischen den zwei Antriebswellen erfolgen, muss also nicht mit Hilfe eines Summierungsgetriebes erfolgen. Da die zwei elektrischen Maschinen synchron in ihrer Drehzahl bzw. ihrem Drehmoment aufeinander abgestimmt werden können, ist ein ruckfreies Schalten zwischen den zwei elektrischen Maschinen möglich, was in ganz besonders vorteilhafter Weise den Fahrkomfort eines Bedieners eines Nutzfahrzeugs erhöht.

Das Getriebe könnte mindestens eine Ausgangsschnittstelle, vorzugsweise zwei Ausgangsschnittstellen aufweisen. Die erste und/oder die zweite Eingangsschnittstelle des Getriebes ist mit einer ersten und/oder mit einer zweiten Ausgangsschnittstelle reversibel verbindbar. Dies könnte mittels mindestens einer Kupplung erfolgen. Hierzu kommen beispielsweise hydraulisch betätigbare Lamellenkupplungen oder von jeweils einem Aktuator betätigbare Kupplungen oder Synchron-Kupplungen in Frage.

Insbesondere bei einem in Form eines Traktors ausgebildeten landwirtschaftlichen Nutzfahrzeugs weist das Getriebe bevorzugt zwei oder mindestens drei unterschiedlich einstellbare Getriebeschaltstufen auf. Hierdurch können zwei, drei oder mehr unterschiedliche Betriebsmodi des Nutzfahrzeugs bzw. des Traktors realisiert werden, welche jeweils stufenlos ansteuerbar sind, da die zum Antrieb des Nutzfahrzeugs verwendeten elektrischen Maschinen selbst stufenlos in ihrer Drehzahl ansteuerbar sind, und zum Beispiel mittels der Eingangsschnittstellen des Getriebes unmittelbar verbunden ist.

Eine kompakte Bauweise des gesamten Antriebssystems kann insbesondere dadurch erreicht werden, dass bezüglich des Motors der erste und der zweite Generator im Wesentlichen hintereinander - hinsichtlich der räumlichen Anordnung dieser Komponenten - angeordnet sind. Im Konkreten bezieht sich die Hintereinanderanordnung des Motors und der elektrischen Maschinen in Richtung der Fahrzeuglängsachse. Ein Generator weist einen mit einer Welle drehfest verbundenen Rotor und einen Stator auf. Der Rotor des ersten Generators und der Rotor des zweiten Generators könnte dann von der gleichen Welle antreibbar sein. Alternativ hierzu ist der erste Generator von einer Welle antreibbar und der zweite Generator ist von einer weiteren Welle antreibbar, wobei die zwei Wellen im Wesentlichen koaxial zueinander angeordnet sein könnten.

Eine einfache und somit kostengünstige Bauweise kann dadurch gegeben sein, dass die Rotoren des ersten und des zweiten Generators drehfest mit einer von dem Motor angetriebenen Welle verbunden sind.

Grundsätzlich könnten die in Generatoren mechanisch von dem Motor abkoppelbar sein, beispielsweise mit entsprechenden Kupplungen. Bevorzugt ist allerdings vorgesehen, dass die Rotoren des ersten und des zweiten Generators bei laufendem Motor - zum Beispiel über dessen Abtriebswelle - stets mitdrehen. Damit nicht ständig elektrischer Strom generiert wird, obwohl dieser unter Umständen gerade nicht gebraucht wird, ist deshalb vorgesehen, den ersten und/oder dem zweiten Generators elektrisch zu aktivieren oder zu deaktivieren.

Zum Erzielen einer kompakten Bauweise kann es weiterhin dienlich sein, dass bezüglich des Motors die erste und die zweite elektrische Maschine im Wesentlichen hintereinander - hinsichtlich der räumlichen Anordnung dieser Komponenten - angeordnet sind. Im Konkreten bezieht sich die Hintereinanderanordnung des Motors und der elektrischen Maschinen in Richtung der Fahrzeuglängsachse. Eine elektrische Maschine weist einen mit einer Abtriebswelle drehfest verbundenen Rotor und einen Stator auf. Die Abtriebswelle der einen elektrischen Maschine könnte nun eine Hohlwelle aufweisen, welche koaxial zu der Abtriebswelle der anderen elektrischen Maschine angeordnet ist. Dies ermöglicht eine unmittelbare Hintereinanderanordnung der zwei elektrischen Maschinen.

In einer besonders bevorzugten Ausführungsform sind der Motor, der mindestens eine Generator und die zwei elektrischen Maschinen unmittelbar benachbart zueinander angeordnet. Bezüglich der Reihenfolge ist es von Vorteil, zwischen dem Motor und den zwei elektrischen Maschinen den mindestens einen Generator räumlich anzuordnen. Hierdurch können in ganz besonders vorteilhafter Weise die elektrischen Komponenten, das heißt der mindestens eine elektrische Generator und die zwei elektrischen Maschinen, von einer gemeinsamen Kühleinrichtung gekühlt werden.

Wenn das erfindungsgemäße Antriebssystem für einen Traktor eingesetzt wird, ist eine - insbesondere in Form einer Zapfwelle ausgebildete - mechanische Schnittstelle vorgesehen, über welche mechanisches Drehmoment von dem Motor oder von dem Getriebe oder von einer elektrischen Maschine auf ein mechanisch antreibbares, an den Traktor adaptierbares Arbeitsgerät übertragbar ist.

So ist ganz besonders bevorzugt eine Kupplung vorgesehen, mit welcher die mechanische Schnittstelle mit dem Motor und/oder mit mindestens einer elektrischen Maschine verbindbar ist. Hierbei kann es sich z.B. um eine unmittelbare Kupplung zwischen einer von dem Motor angetriebenen Welle und der mechanischen Schnittstelle, d.h. der Zapfwelle handeln. Alternativ oder zusätzlich kann es sich hierbei um eine unmittelbare Kupplung zwischen der mindestens einen elektrischen Maschine und der mechanischen Zapfwelle handeln. Es ist also kein Summierungsgetriebe erforderlich, da die Drehzahl der elektrischen Maschine auf die momentan vorliegende Drehrichtung und Drehzahl des Motors bzw. der mechanischen Schnittstelle einstellbar ist.

Wenn die mechanische Schnittstelle ausschließlich mit dem Motor bzw. einer von dem Motor angetriebenen Welle verbunden ist, ist die auf die mechanische Schnittstelle übertragene Drehzahl abhängig von der Drehzahl des Motors. Alternativ kann die mechanische Schnittstelle mit lediglich einer elektrischen Maschine verbunden sein. In diesem Fall kann aufgrund der unabhängigen Drehzahlansteuerung der elektrischen Maschine von der Drehzahl des Motors des Nutzfahrzeugs die mechanische Schnittstelle mit einer konstanten Drehzahl oder mit einer variablen Drehzahl, beispielsweise in Abhängigkeit der Fahrtgeschwindigkeit des Nutzfahrzeugs (Wegzapfwelle), betrieben werden. Hierzu ist eine entsprechende Steuereinheit und mindestens ein Fahrtgeschwindigkeitssensor erforderlich.

Wiederum alternativ hierzu kann Drehmoment von einer vom Motor angetriebenen Welle und von einer oder zwei elektrischen Maschinen auf die mechanische Schnittstelle übertragen werden. In diesem Betriebszustand ist es beispielsweise möglich, die gesamte Leistung des Motors - und zwar leistungsverzweigt über die mindestens eine elektrische Maschine - auf die mechanische Schnittstelle (Zapfwelle) zu übertragen, wobei hier in ganz besonders vorteilhafter Weise die Drehzahl des Motors derart eingestellt werden kann, dass ein minimierter Kraftstoffverbrauch für diesen Betriebsmodus erzielt wird.

Für den letztgenannten Fall ist bevorzugt ein Summierungsgetriebe vorgesehen, mit welchem mechanisches Drehmoment vom Motor und von mindestens einer elektrischen Maschine summiert auf die mechanische Schnittstelle übertragbar ist. Das Summierungsgetriebe könnte beispielsweise ein Planetengetriebe aufweisen und an das Getriebe gekoppelt sein.

Ganz besonders bevorzugt und ebenfalls hauptsächlich für Nutzfahrzeuge, die in Form eines Traktors ausgebildet sind, weist das Getriebe eine zweite Ausgangsschnittstelle auf, über welche Drehmoment an eine weitere Antriebsachse - insbesondere an eine Vorderachse des Nutzfahrzeugs - übertragbar ist. Idealerweise erfolgt dies derart, dass mit Hilfe des Getriebes Drehmoment von der ersten elektrischen Maschine auf die erste Antriebsachse und gleichzeitig Drehmoment von der zweiten elektrischen Maschine auf die weitere Antriebsachse derart übertragbar ist, dass die Vorderachse und die Hinterachse mit unterschiedlichen Drehzahlen bzw. Drehmomenten antreibbar ist. Hierzu ist das Getriebe entsprechend auszubilden.

In einer weiteren Ausbaustufe des Getriebes weist dieses eine dritte Ausgangsschnittstelle auf, welche mit einer von dem Motor antreibbaren Welle - beispielsweise über ein Summierungsgetriebe - koppelbar ist. Hierdurch ist mit Hilfe des Getriebes eine Drehmomentkupplung zwischen Motor und mindestens einer elektrischen Maschine auf die dritte Ausgangsschnittstelle möglich.

Der Motor weist bevorzugt einen Verbrennungsmotor, einen Dieselmotor oder eine Brennstoffzelle auf.

Ein elektrischer Generator und/oder eine elektrische Maschine weist bevorzugt eine Asynchronmaschine oder eine DC/DC Permanent-Magnet-Maschine (Synchronmaschine) auf beziehungsweise arbeitet nach diesen Prinzipien. So könnte mindestens ein Wechselrichter bzw. Umrichter vorgesehen sein. Da der elektrische Strom mit Hilfe des mindestens einen elektrischen Generators erzeugt wird, welcher vom Motor des Nutzfahrzeugs angetrieben wird und der Motor in Abhängigkeit der jeweiligen Fahrsituation des Nutzfahrzeugs eine variable Drehzahl aufweist, weist der von dem elektrischen Generator erzeugte elektrische Wechselstrom eine variable Frequenz auf. Zur Umwandlung des elektrischen Wechselstroms variabler Frequenz in elektrischen Wechselstrom einer vorgegebenen, im Wesentlichen konstanten Frequenz könnte ein solcher Wechselrichter dienen. Mit dem Wechselrichter könnte der von dem elektrischen Generator erzeugte elektrische Wechselstrom veränderbarer Frequenz zunächst in Gleichstrom und dann in Wechselstrom der vorgebbaren Frequenz umgewandelt werden. Mit diesem Wechselstrom können dann beispielsweise die elektrische Maschine oder andere elektrische Komponenten angetrieben werden. Bevorzugt ist ein Gleichstromkreis mit mindestens einem elektrischen Speicher vorgesehen. Dieser Gleichstromkreis wird von dem Wechselrichter gespeist und könnte sozusagen als Zwischenstromkreis dienen, an welchen auch unmittelbar elektrische Verbraucher angeschlossen werden können, welche mit Gleichstrom betrieben werden. Der elektrische Speicher könnte beispielsweise in Form einer Batterie oder entsprechend dimensionierter Kondensatoren ausgeführt sein.

Ebenfalls ganz besonders bevorzugt ist mindestens ein weiterer Wechselrichter vorgesehen, mit welchem der Gleichstrom in einen Wechselstrom einer vorgebbaren Frequenz oder einen vorgebbaren Verlauf variabler Frequenzen umwandelbar ist. Hiermit kann beispielsweise mindestens ein elektrischer Verbraucher betrieben werden, welcher mit Wechselstrom angetrieben wird.

Hinsichtlich eines landwirtschaftlichen Nutzfahrzeugs wird die eingangs genannte Aufgabe durch die Merkmale des Patentanspruchs 14 gelöst. Demgemäß umfasst ein erfindungsgemäßes landwirtschaftliches Nutzfahrzeug ein Antriebssystem nach einem der Ansprüche 1 bis 13. Es ist ein erster Betriebsmodus vorgesehen, bei welchem der Motor, der mindestens eine Generator, die mindestens eine elektrische Maschine und/oder das Getriebe mittels einer Steuereinrichtung derart angesteuert werden, dass das Fahrzeug sich mit einer Geschwindigkeit von 0 bis 10 km/h fortbewegt. Dieser Betriebsmodus liegt beispielsweise bei einem Traktor dann vor, wenn die höchste Zugkraft des Traktors beim Pflügen benötigt wird. Dann ist insbesondere die von Motor und/oder elektrischen Maschine erzeugte Leistung auf mindestens eine Antriebsachse übertragbar.

Bevorzugt ist ein zweiter Betriebsmodus vorgesehen, bei welchem der Motor, der mindestens eine Generator, die mindestens eine elektrische Maschine und/oder das Getriebe mittels einer Steuereinrichtung derart angesteuert werden, dass das Fahrzeug sich mit einer Geschwindigkeit von 0 bis 17 km/h fortbewegt. Dieser Betriebsmodus ist insbesondere für Feldarbeiten des Traktors vorgesehen, bei welchem keine maximalen Zugkräfte auftreten. Dann ist insbesondere die vom Motor und/oder elektrischen Maschine erzeugte Leistung auf mindestens eine Antriebsachse und/oder auf die mechanische Schnittstelle übertragbar.

Weiterhin könnte ein dritter Betriebsmodus vorgesehen sein, bei welchem der Motor, der mindestens eine Generator, die mindestens eine elektrische Maschine und/oder das Getriebe mittels einer Steuereinrichtung derart angesteuert werden, dass das Fahrzeug sich mit einer Geschwindigkeit von 0 bis zu 60 km/h fortbewegt. Dieser Betriebsmodus dient insbesondere zu Transportvorgängen des Traktors auf der Straße. Dann ist insbesondere mit der von Motor und/oder elektrischen Maschine erzeugten Leistung die mindestens eine Antriebsachse mit einer hohen Drehzahl betreibbar und die mechanische Schnittstelle ist in der Regel abgeschaltet.

Die oben genannten Betriebsmodi werden im Rahmen der Figurenbeschreibung an konkreten Ausführungsbeispielen weiter erläutert.

In einer ganz besonders bevorzugten Ausführungsform sind der mindestens eine Generator, die erste und die zweite elektrische Maschine sowie das Getriebe derart von einer Steuereinrichtung ansteuerbar, dass der Motor zumindest größtenteils in einem verbrauchsgünstigen Leistungsbereich betreibbar ist, bei welchem beispielsweise möglichst wenig Kraftstoff bei möglichst hoher Drehzahl- bzw. Drehmomentabgabe für den Fahrantrieb möglich ist. In diesem Fall kann in ganz besonders vorteilhafter Weise das Nutzfahrzeug bzw. der Traktor wirtschaftlich und kostengünstig betrieben werden.

Wie bereits angedeutet, ist in einer weiteren Ausbaustufe des Nutzfahrzeugs ein vierter Betriebsmodus vorgesehen, bei welchem bis zu 100 % der abgegebenen Leistung des Motors und gegebenenfalls der beiden elektrischen Maschinen auf die mechanische Schnittstelle ausgebbar ist. Auch hierzu wird im Rahmen der Figurenbeschreibung auf ein entsprechendes Ausführungsbeispiel eingegangen werden.

Mit einem in erfindungsgemäßer Weise ausgebildeten Antriebssystem beziehungsweise einer und/oder mehrerer weiter vorteilhafter Ausführungsformen können eine Vielzahl von Vorteilen erzielt werden. So ergibt sich beispielsweise ein geringer Gesamtaufwand für Elektrokomponenten und Getriebekomponenten. Es ist eine erhöhte Zuverlässigkeit durch wenige Komponenten erzielbar. Wenn die elektrischen Komponenten an einem hohen Bauort eines Traktors angebaut sind, kann hierdurch z.B. beim Waten in Wasser eine erforderliche elektrische Sicherheit gewährleistet sein. Es sind keine Überdimensionierung der elektrischen Antriebe für stark unterschiedliche Achslasten erforderlich. In dem Getriebe liegt im Wesentlichen keine Blindleistung vor. Es kann eine komplizierte Einzelradansteuerung vermieden werden, welche insbesondere Probleme bei sich schnell ändernden Bodenreibbeiwerten z.B. zwischen trockenem Asphalt und Eis an den einzelnen Reifen ergeben können. Bei Verwendung eines konventionellen Zentralantriebs ist eine Umschaltung auf Achsantrieb zur Erhöhung des Vorlaufs für kleinere Wendekreise möglich, wodurch der Wendekreis (Pull in Turn) des Traktors verkleinert werden kann. Es herrscht optimale Traktion bei geringen, hohen und bei schnell wechselnden Reibbeiwerten zwischen Boden und Reifen. Es ist eine Fahrstabilität ohne Ausbrechen des Fahrzeugs auf unterschiedlichen Reibbeiwerten möglich. Das gesamte Antriebssystem kann in einer kompakten Bauweise realisiert werden. Es ist eine Kriechgang-Funktion möglich. Die Gesamtverluste von Elektrokomponenten und Getriebe sind ähnlich gering wie bei aus dem Stand der Technik bekannten Antrieben mit Synchronschaltgetrieben, was geringe Verluste bedeutet. Es können derzeit erhältliche Getriebekomponenten und Achsen, z.B. Vorderachsen und Hinterachsen mit Kegeltrieben und Planeten-Endantrieben, verwendet werden.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung der bevorzugten Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen jeweils in einer schematischen Darstellung
- Fig. 1: eine grundlegende Konfiguration eines Ausführungsbeispiels eines Antriebssystems
- Fig. 2 bis 6: jeweils ein Ausführungsbeispiel eines erfindungsgemäßen Antriebssystems,
- Fig. 7: in einem Diagramm den Zusammenhang des Drehmomentverhältnisses eines Elektromotors in Abhängigkeit von der prozentualen Drehzahl, mit welcher der Elektromotor betrieben wird und
- Fig. 8: in einem Diagramm die relative Zugkraft der zwei elektrischen Maschinen in drei vorgesehenen Fahrstufen.

In den Fig. sind gleiche oder ähnliche Bauteile mit denselben Bezugszeichen gekennzeichnet.

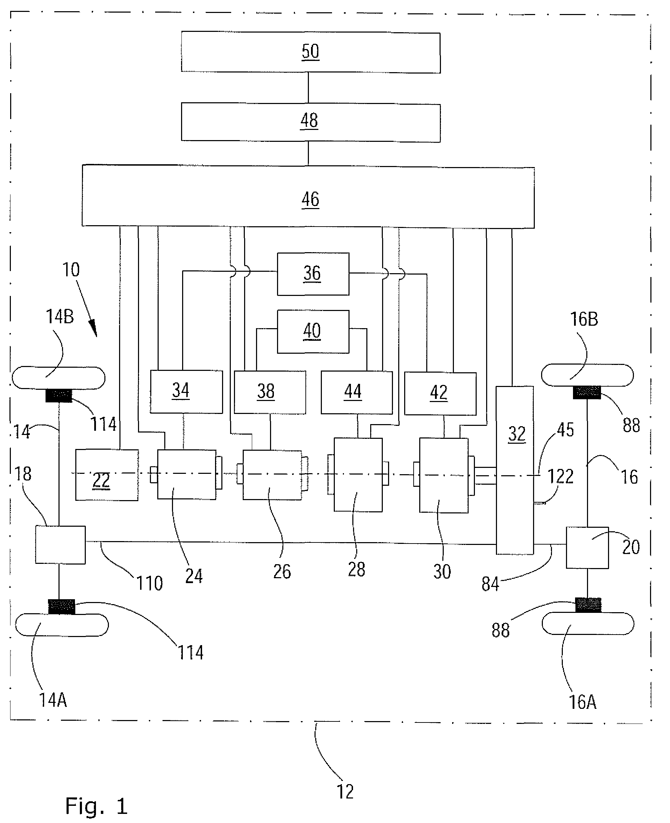

In Fig. 1 ist in einer schematischen Übersicht die Konfiguration eines Antriebssystems 10 eines landwirtschaftlichen Nutzfahrzeugs, und zwar eines Traktors 12 gezeigt. Der Traktor 12 umfasst eine Vorderachse 14 und eine Hinterachse 16, wobei der Vorderachse 14 und der Hinterachse 16 jeweils die zwei Räder 14A, 14B bzw. 16A, 16B zugeordnet sind. Der in Fig. 1 gezeigte Traktor umfasst eine angetriebene Vorderachse 14 mit einem (Vorderachs)-Differenzial 18. Auch die Hinterachse 16 ist angetrieben und weist ein (Hinterachs)-Differenzial 20 auf. Der Traktor 12 weist einen Verbrennungsmotor 22 auf, welcher ein mechanisches Drehmoment erzeugt und an die anderen Komponenten im Antriebssystem 10 abgibt. In dem Antriebssystem 10 gemäß Fig. 1 sind zwei elektrische Generatoren 24, 26 vorgesehen, die mit dem vom Verbrennungsmotor 22 erzeugten mechanischen Drehmoment antreibbar sind. Weiterhin sind zwei elektrische Maschinen 28, 30 vorgesehen, welche ein mechanisches Drehmoment erzeugen, was an das Getriebe 32 und somit auf das Differenzial 20 der Hinterachse 16 beziehungsweise auf das Differenzial 18 der Vorderachse 14 übertragbar ist. Dem ersten elektrischen Generator 24 ist ein Umrichter 34 (AC/DC-Wandler) zugeordnet, welcher den vom elektrischen Generator 24 erzeugten Wechselstrom in Gleichstrom umwandelt und einem ersten Zwischenkreis 36 zur Verfügung stellt. Dementsprechend ist dem zweiten elektrischen Generator 26 ein Umrichter 38 zugeordnet, welcher den vom elektrischen Generator 26 erzeugten Wechselstrom in Gleichstrom umwandelt und einem zweiten Zwischenkreis 40 zu Verfügung stellt. An dem ersten Zwischenkreis 36 ist ein Umrichter 42 (DC/AC-Wandler) vorgesehen, der mit der zweiten elektrischen Maschine 30 in Verbindung steht und welcher den Gleichstrom des ersten Zwischenkreises 36 in Wechselstrom vorgebbarer Frequenz umwandelt. Mit dem vom Umrichter 42 gewandelten Wechselstrom wird die elektrische Maschine 30 angetrieben. An dem zweiten Zwischenkreis 40 ist ein Umrichter 44 (DC/AC-Wandler) vorgesehen, der mit der ersten elektrischen Maschine 28 in Verbindung steht und welcher den Gleichstrom des zweiten Zwischenkreises 40 in Wechselstrom vorgebbarer Frequenz umwandelt. Mit dem vom Umrichter 44 gewandelten Wechselstrom wird die elektrische Maschine 28 angetrieben. Der Verbrennungsmotor 22, die elektrischen Generatoren 24, 26 und die elektrischen Maschinen 28, 30 sind bezüglich der Fahrzeuglängsachse 45 hintereinander angeordnet.

Lediglich schematisch sind mit dem Bezugszeichen 46 Sensoren für Drehzahlen einzelner Wellen, Drehmomente, Lenkwinkel, Spannungen und Ströme angedeutet, welche unmittelbar an den jeweiligen Bauteilen angeordnet sein können und welche elektrische Signale erzeugen, die an eine entsprechende Steuereinrichtung 48 übermittelbar ist sind. Weiterhin sind die von den - ebenfalls lediglich schematisch angedeuteten - Bedienelementen 50 des Traktors 12 erzeugten elektrischen Signale der Steuereinrichtung 48 übermittelbar, welche ihrerseits den Verbrennungsmotor 22, die elektrischen Generatoren 24, 26, die elektrischen Maschinen 28, 30, das Getriebe 32, dass Vorderachsdifferenzial 18 bzw. das Hinterachsdifferenzial 20, den ersten Zwischenkreis 36, den zweiten Zwischenkreis 40 oder die Umrichter 34, 38, 44, 42 entsprechend ansteuert. Obwohl gemäß diesem Ausführungsbeispiel die Steuereinrichtung 48 sämtliche soeben genannten Komponenten ansteuert, wäre es durchaus auch denkbar, eine oder mehrere Komponenten von jeweils einer eigenen Steuereinrichtung anzusteuern. Diese Steuereinrichtungen wären beispielsweise mittels eines CAN-Busses miteinander verbindbar auszugestalten.

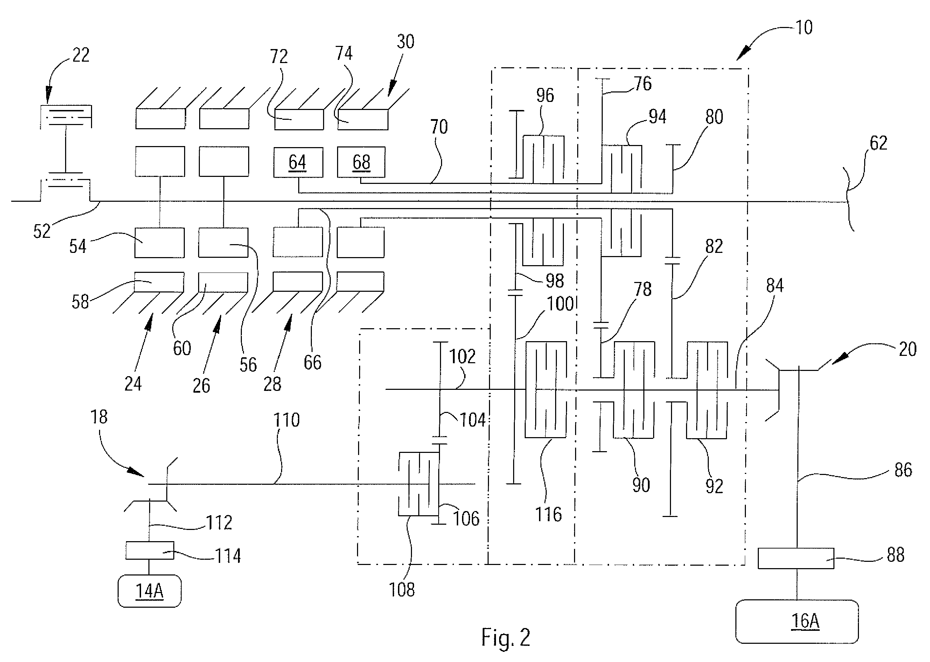

Fig. 2 zeigt in einer schematischen Darstellung ein erstes konkretes Ausführungsbeispiel, bei welchem der Verbrennungsmotor 22 über die Antriebswelle 52 stets die zwei Rotoren 54, 56 der elektrischen Generatoren 24, 26 mechanisch antreibt. Die beiden Statoren 58, 60 der beiden elektrischen Generatoren 24, 26 sind drehfest an einem - in den Fig. nicht gezeigten - Gehäuse angeordnet. Mit der Antriebswelle 52 ist auch eine in Fig. 2 nicht gezeigte Zapfwelle des Traktors 12 antreibbar, wobei mit dem Bezugszeichen 62 eine diesbezügliche mechanische Schnittstelle angedeutet ist.

Der Rotor 64 der ersten elektrischen Maschine 28 ist drehfest mit der Hohlwelle 66 verbunden, welche koaxial zur Antriebswelle 52 angeordnet ist. Der Rotor 68 der zweiten elektrischen Maschine 30 ist drehfest mit einer Hohlwelle 70 verbunden, die koaxial sowohl zur Antriebswelle 52 als auch zur Hohlwelle 66 angeordnet ist. Auch die Statoren 72, 74 der zwei elektrischen Maschinen 28, 30 sind drehfest an einem - in den Fig. nicht gezeigten - Gehäuse angeordnet.

Drehfest an der Hohlwelle 70 ist das Zahnrad 76 angeordnet, welches mit dem Zahnrad 78 kämmt, mit welchen eine dritte Getriebestufe des Getriebes 32 darstellbar ist. An der Hohlwelle 66 ist das Zahnrad 80 drehfest angeordnet, welches mit dem Zahnrad 82 kämmt, mit welchen eine erste Getriebestufe des Getriebes 32 darstellbar ist. Die Zahnräder 78, 82 sind drehbar zur ersten Getriebeausgangswelle 84 angeordnet, welche über ein Winkelgetriebe mit dem Hinterachsdifferenzial 20 in Verbindung steht. Das Form der Getriebeausgangswelle 84 auf das Winkelgetriebe und das Hinterachsdifferenzial 20 übertragene Drehmoment wird über die Welle 86 der Hinterachse 16 über ein Planeten-Zwischengetriebe 88 auf das in Fig. 1 gezeigte Hinterrad 16A übertragen. In Fig. 2 sind die Räder 14B, 16B nebst deren Antriebswellen nicht gezeigt.

Mit Hilfe der Kupplung 90 kann das Zahnrad 78 mit der Getriebeausgangswelle 84 drehfest verbunden werden. Hierdurch ist ein Drehmomentfluss von der zweiten elektrischen Maschine 30 über die Hohlwelle 70, das Zahnrad 76, das Zahnrad 78, die Kupplung 90 und die Getriebeausgangswelle 84 auf das Hinterachsdifferentialgetriebe 20 herstellbar. Mit Hilfe der Kupplung 92 kann das Zahnrad 82 mit der Getriebeausgangswelle 84 drehfest verbunden werden. Hierdurch ist ein Drehmomentfluss von der ersten elektrischen Maschine 28 über die Hohlwelle 66, das Zahnrad 80, das Zahnrad 82, die Kupplung 92 und die Getriebeausgangswelle 84 auf das Hinterachsdifferentialgetriebe 20 herstellbar.

Mit der Kupplung 94 kann die Hohlwelle 70 drehfest mit der Hohlwelle 66 verbunden werden. Hierdurch kann die erste elektrische Maschine 30 mit der zweiten elektrischen Maschine 28 unmittelbar gekoppelt werden, so dass das Zahnrad 76 der Hohlwelle 70 synchron mit dem Zahnrad 80 der Hohlwelle 66 bei gleicher Drehzahl und summiertem Drehmoment der beiden elektrischen Maschinen 28, 30 dreht. Bevorzugt wird vor einem Einrücken der Kupplung 94 die Rotoren 64, 68 der beiden elektrischen Maschinen 30 und 28 auf die gleiche Drehzahl gebracht, so dass die beiden Hohlwellen 66, 70 mit derselben Drehzahl drehen und ein Einrücken der Kupplung 94 ohne Schaltruck im Antriebsstrang und somit ohne Komforteinbußen für einen Fahrzeugbediener erfolgen kann. Je nachdem, ob die Kupplung 90 oder die Kupplung 92 eingerückt ist, ist somit ein Drehmomentfluss von den zwei elektrischen Maschinen 28, 30 einerseits über die Zahnradkette 76, 78 oder andererseits über die Zahnradkette 80, 82 auf die Getriebeausgangswelle 84 möglich.

Mit der Kupplung 96 ist das relativ zur Hohlwelle 70 drehbar gelagerte Zahnrad 98 drehfest mit der Hohlwelle 70 verbindbar. Das Zahnrad 98 kämmt mit dem Zahnrad 100, welches drehfest mit der zweiten Getriebeausgangswelle 102 verbunden ist. Mit der Zahnradkette 98, 100 ist eine zweite Getriebestufe des Getriebes 32 darstellbar. Drehfest mit der zweiten Getriebeausgangswelle 102 ist das Zahnrad 104 verbunden, welches mit dem Zahnrad 106 kämmt und über die Kupplung 108 in ihrem eingerückten Zustand mit der Welle 110 drehfest verbunden werden kann. Die Welle 110 überträgt mechanisches Drehmoment auf das Winkelgetriebe und Vorderachsdifferenzial 18, wodurch die Welle 112 über das Planeten-Zwischengetriebe 114 das Vorderrad 14A der Vorderachse 14 antreibt.

Falls die Kupplung 116 eingerückt ist, kann die Welle 84 drehfest mit der Welle 102 verbunden werden. Hierdurch kann beispielsweise ein Drehmomentfluss von einem der Zahnräder 98, 76 oder 80 auf das jeweils damit kämmende Zahnrad 100, 78 oder 82 übertragen werden. Beide Wellen 84 und 102 übertragen sodann dieses Drehmoment sowohl auf das Hinterachsdifferentialgetriebe 20 als auch auf das Vorderachsdifferentialgetriebe 18 und somit auf die Hinterräder 16A, 16B und die Vorderräder 14A, 14B gleichermaßen. Falls also die Kupplung 116 eingerückt ist, werden die Räder der Vorderachse 14 sowie der Hinterachse 16 in gekoppelter Weise und abhängig voneinander mit gleicher Radumfangsgeschwindigkeit angetrieben.

Falls die Kupplung 116 nicht eingerückt ist, könnten beispielsweise die Räder 14A, 14B der Vorderachse 14 ausschließlich von der zweiten elektrischen Maschine 30 angetrieben werden, und zwar über den Rotor 68, die Hohlwelle 70, die eingerückte Kupplung 96, die Zahnräder 98, 100, die Welle 102, die Zahnräder 104, 106, die eingerückte Kupplung 108 und die Welle 110 auf das Vorderachsdifferenzialgetriebe 18. Die Hinterräder 16A, 16B der Hinterachse 16 könnten über den Rotor 64 der ersten elektrischen Maschine 28, die Hohlwelle 66, die eingerückte Kupplung 94, die Zahnräder 76, 78, die eingerückte Kupplung 90, die Welle 84 auf das Hinterachsdifferentialgetriebe 20 übertragen werden. Falls also die Kupplung 116 nicht eingerückt ist, werden die Räder 14A, 14B der Vorderachse 14 und die Räder 16A, 16B der Hinterachse 16 unabhängig voneinander mit unterschiedlicher Radumfangsgeschwindigkeit angetrieben, und zwar in Abhängigkeit der Drehzahlen der ersten bzw. elektrischen Maschine 28, 30. Hierdurch kann z.B. bei entsprechender Ansteuerung der zwei elektrischen Maschinen 28, 30 ein kleiner Wendekreis am Vorgewende eines Felds erzielt werden (Pull in Turn).

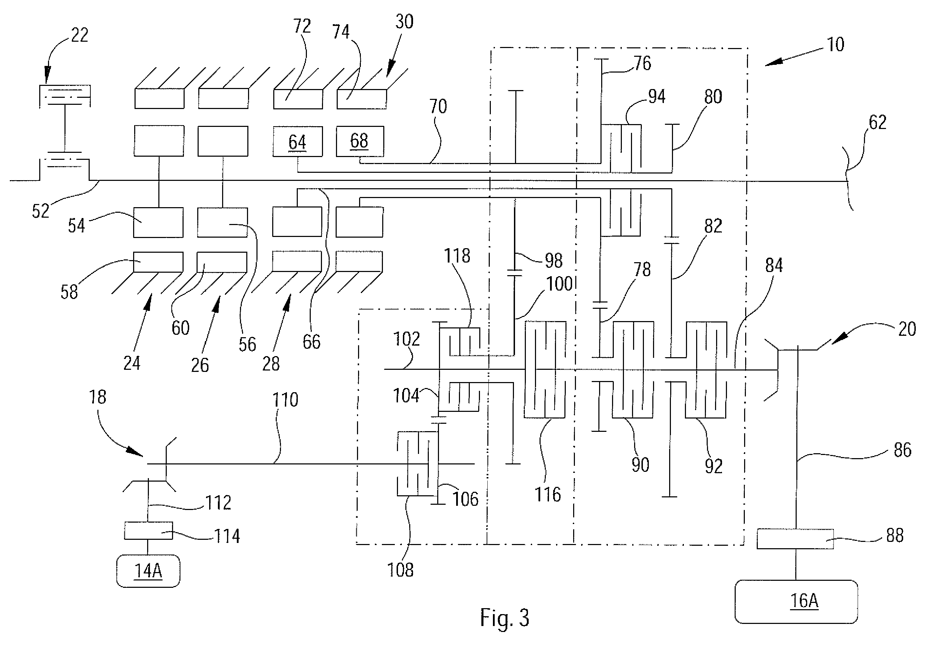

Fig. 3 zeigt in einer schematischen Darstellung ein zweites Ausführungsbeispiel, das im Wesentlichen vergleichbar zu dem aus Fig. 2 ausgebildet ist. Daher sind gleiche oder ähnliche Baugruppen mit denselben Bezugszeichen gekennzeichnet. Das in Fig. 3 vorgesehene Zahnrad 98 ist in diesem Ausführungsbeispiel drehfest mit der Hohlwelle 70 verbunden. Das Zahnrad 100 aus diesem Ausführungsbeispiel ist drehfest mit einer Hohlwelle verbunden, welche mit der Kupplung 118 drehfest mit dem Zahnrad 104 verbindbar ist. Insoweit ist die Funktion der Kupplung 118 aus dem Ausführungsbeispiel gemäß Fig. 3 vergleichbar zu der Funktion der Kupplung 96 des Ausführungsbeispiels aus Fig. 2.

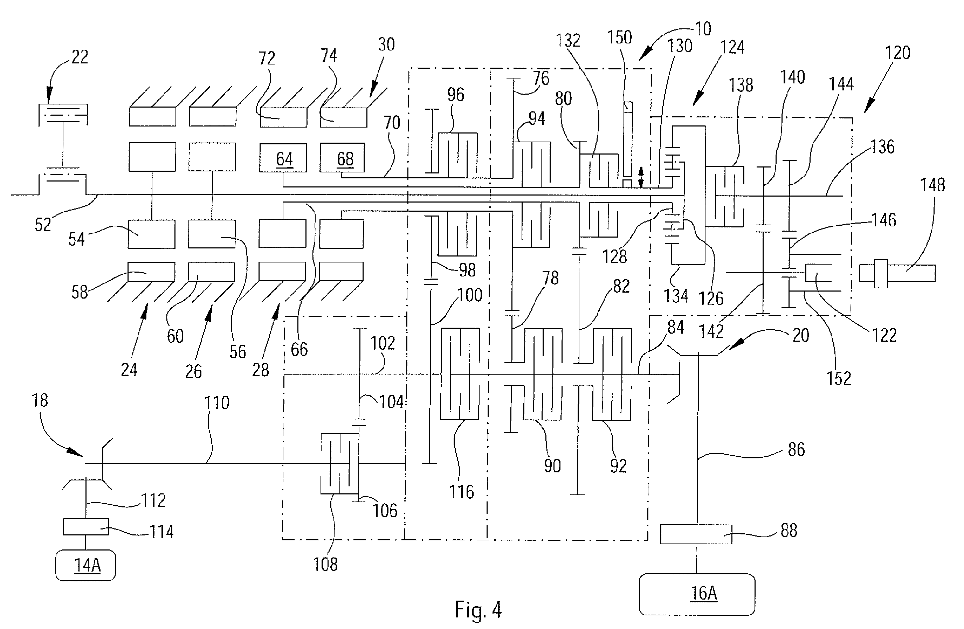

Fig. 4 zeigt in einer schematischen Darstellung ein drittes Ausführungsbeispiel, das im Wesentlichen vergleichbar zu dem aus Fig. 2 ist. Anstelle der mechanischen Schnittstelle 62 aus Fig. 2 ist nunmehr ein stufenloses Zapfwellengetriebe 120 vorgesehen, mit welchem die Zapfwelle 122 bzw. 152 betreibbar ist. Das Zapfwellengetriebe 120 umfasst ein Planetengetriebe 124. Der Planetenträger 126 des Planetengetriebes 124 ist mit der Antriebswelle 52 drehfest verbunden. Das Sonnenrad 128 des Planetengetriebes 124 ist mit einer Hohlwelle 130 drehfest verbunden und über die Kupplung 132 mit dem Zahnrad 80 bzw. der Hohlwelle 66 drehfest verbindbar. Der Ausgang des Zapfwellengetriebes 120 ist mit dem Hohlrad 134 des Planetengetriebes 128 verbindbar. Das Hohlrad 134 ist mit der Welle 136 drehfest verbindbar, sofern die Kupplung 138 eingerückt ist.

Vom Verbrennungsmotor 22 erzeugtes Drehmoment kann über die Antriebswelle 52 auf den Planetenträger 126 des Planetengetriebes 134 übertragen werden und mit dem von der ersten elektrischen Maschine 28 erzeugten Drehmoment über die Hohlwelle 130 und das Sonnenrad 128 in dem Planetengetriebe 124 summiert werden, sofern die Kupplung 132 eingerückt ist. In diesem Betriebsmodus ist ein stufenloser Zapfwellenbetrieb der Zapfwellen 122 und 152 möglich, wobei beispielsweise der Verbrennungsmotor 22 in seinem günstigen für einen Zapfwellenbetrieb zu geringen Drehzahlbereich jedoch mit geringem Kraftstoffverbrauch betreibbar ist. Zu der geringeren Drehzahl der Antriebswelle 52 kann in diesem Betriebsmodus mit Hilfe der ersten elektrischen Maschine 28 eine Drehzahlsummierung auf die für den Zapfwellenbetrieb erforderliche Zapfwellendrehzahl erfolgen. Die Zapfwelle 122 ermöglicht eine genormte Zapfwellendrehzahl von 540 Umdrehungen pro Minute. Die Zapfwelle 152 erlaubt die genormte Drehzahl von 1000 Umdrehungen pro Minute.

Zusätzlich könnte auch noch von der zweiten elektrischen Maschine 30 erzeugtes mechanisches Drehmoment über die Hohlwelle 70 und die Hohlwelle 66 ebenfalls auf die Hohlwelle 130 übertragen werden, sofern die Kupplung 94 ebenfalls eingerückt ist. In diesem Betriebsmodus wird vom Verbrennungsmotor 22 und von den zwei elektrischen Maschinen 28, 30 erzeugtes Drehmoment in dem Planetengetriebe 124 summiert. Alternativ hierzu könnte das von der zweiten elektrischen Maschine 30 erzeugte mechanische Drehmoment beispielsweise über die Zahnradkette 76, 78 bei eingerückten Kupplungen 94, 90 auf die Hinterachse 16 übertragen werden.

Das vom Hohlrad 134 über die Kupplung 138 auf die Welle 136 abgegebene Drehmoment kann einerseits über die Zahnräder 140, 142 auf die Zapfwelle 122 oder andererseits in einem anderen Übersetzungsverhältnis über die Zahnräder 144, 146 auf die Zapfwelle 152 übertragen werden. Mit dem Bezugszeichen 148 ist ein Zapfwellenstummel angedeutet, welcher zum Umstecken für die beiden typischerweise verwendeten Drehzahlen einer Zapfwelle (540 und 1000 Umdrehungen pro Minute) in die hierfür vorgesehene Aussparung der Zapfwelle 122 bzw. 152 eingestellt werden kann.

Es ist eine Sperrklinke oder Bremse 150 vorgesehen, mit welcher das Hohlrad 130 stillgesetzt werden kann. Dementsprechend dreht in diesem Betriebszustand das Sonnenrad 128 nicht, so dass allein das von der Antriebswelle 52 auf den Planetenträger 126 des Planetengetriebes 124 übertragene Drehmoment unmittelbar auf das Hohlrad 134 und letztendlich auf die Zapfwelle 122 übertragen werden kann.

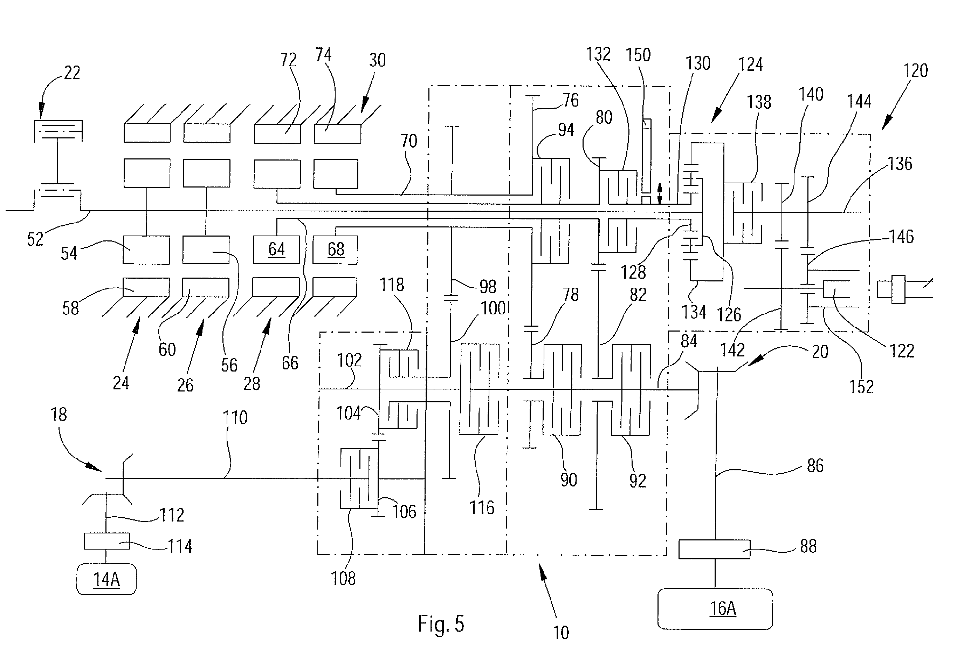

Fig. 5 zeigt in einer schematischen Darstellung ein weiteres Ausführungsbeispiel, das bezüglich des Zapfwellengetriebes 120 vergleichbar zum Ausführungsbeispiel aus Fig. 4 ausgebildet ist. Bezüglich des restlichen Antriebssystems ist das in Fig. 5 gezeigte Ausführungsbeispiel vergleichbar dem aus Fig. 3 ausgebildet. Insoweit wird zur Vermeidung von Wiederholungen auf die diesbezüglichen Beschreibungsteile verwiesen.

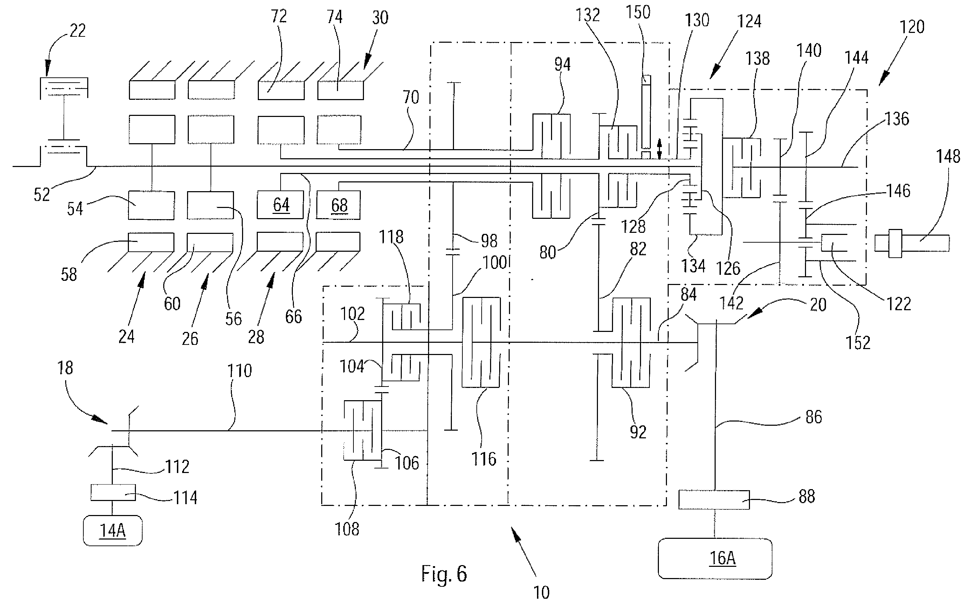

Fig. 6 zeigt in einer schematischen Darstellung ein weiteres Ausführungsbeispiel, das im Wesentlichen vergleichbar zu dem Ausführungsbeispiel aus Fig. 5 ist. Das Ausführungsbeispiel gemäß Fig. 6 umfasst allerdings nicht wie das aus Fig. 5 drei Getriebemodi, das heißt drei verschiedene Zahnradketten 98, 100 oder 76, 78 oder 80, 82. Das Ausführungsbeispiel gemäß Fig. 6 umfasst nur zwei Getriebemodi, welche durch die beiden Zahnradketten 98, 100 und 80, 82 gebildet sind.

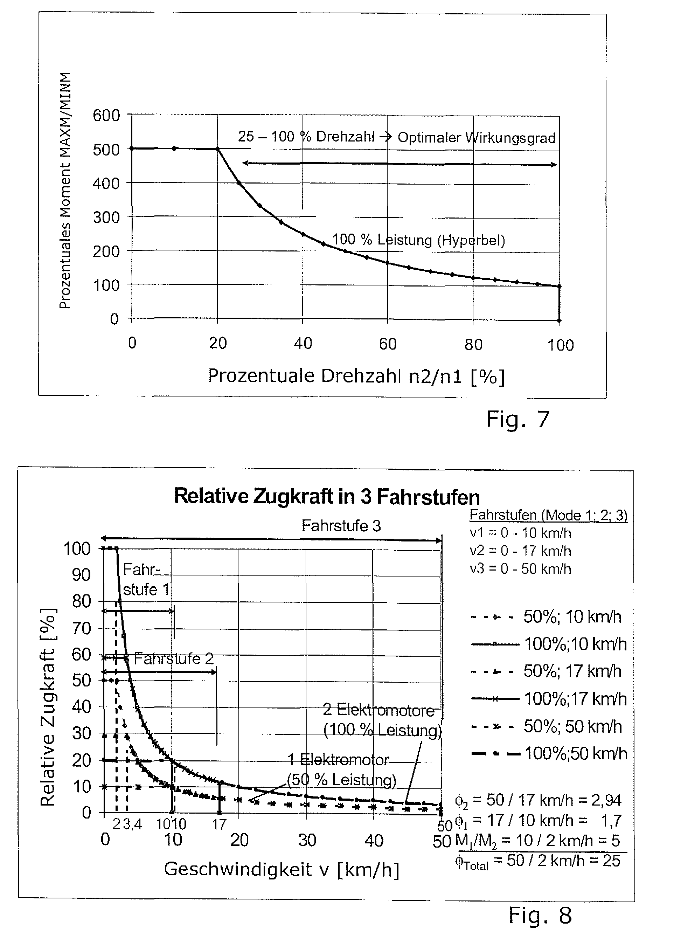

Fig. 7 zeigt in einem schematischen Diagramm die grundsätzlich vorliegenden Drehmomentverhältnisse eines Elektromotors in Abhängigkeit der prozentualen Drehzahl. Auf der Ordinate ist das prozentuale Moment MAXM/MINM in % aufgetragen. Auf der Abszisse ist die prozentuale Drehzahl n2/n1 ebenfalls in % aufgetragen. Ein Elektromotor besitzt beispielsweise eine maximale Spreizung MAXM/MINM = 5. Das maximal vom Elektromotor abgebbare Drehmoment ist bei 20% der Nenndrehzahl des Elektromotors fünfmal größer als bei der Nenndrehzahl von 100%. Die Drehmomente ergeben über den Drehzahlbereich von 20 bis 100% der Nenndrehzahl die gleiche Leistung des Elektromotors und sind daher als Getriebe für den stufenlosen Antrieb von Fahrzeugen ganz besonders geeignet. Von 0 bis 20% der Nenndrehzahl bleibt das maximale Drehmoment des Elektromotors im Wesentlichen konstant.

Fig. 8 zeigt in einem schematischen Diagramm die relative Zugkraft der zwei elektrischen Maschinen in drei möglichen Fahrstufen bzw. Betriebsmodi eines Traktors, wie er beispielsweise gemäß den Ausführungsbeispielen der Fig. 1 bis 5 gezeigt ist. Auf der Ordinate ist die relative Zugkraft in % angegeben. Auf der Abszisse ist die Geschwindigkeit des Fahrzeugs in den Einheiten km/h angegeben. Eine elektrische Maschine kann in eine andere Fahrstufe geschaltet werden, während die andere elektrische Maschine bis zu 50 Prozent der jeweils maximalen Zugkraft aufrechterhält. Hierdurch wird ein im Wesentlichen ruckfreies Umschalten beziehungsweise Wechseln der Fahrstufen möglich.

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

## Patentansprüche

1. Antriebssystem für einen Traktor, mit mindestens einem elektrischen Generator (24, 26), welcher mittels eines von einem Motor (22) des Traktors (12) erzeugten Drehmoments antreibbar ist, und mit einer ersten und einer zweiten elektrischen Maschine (28, 30), welche mittels der von dem mindestens einen elektrischen Generator (24, 26) erzeugten elektrischen Energie antreibbar ist, wobei das von der ersten und/oder der zweiten elektrischen Maschine (28, 30) erzeugte mechanische Drehmoment auf mindestens eine Antriebsachse (14, 16) des Traktors (12) zu dessen Fortbewegung übertragbar ist, **dadurch gekennzeichnet, dass** eine in Form einer Zapfwelle (122, 152) ausgebildete mechanische Schnittstelle (62) vorgesehen ist, über welche mittels eines Summierungsgetriebes (124) ein mechanisches Drehmoment von dem Motor (22) und von mindestens einer der beiden elektrischen Maschinen (28, 30) summiert auf ein mechanisch antreibbares Arbeitsgerät übertragbar ist.

2. Antriebssystem nach Anspruch 1, **dadurch gekennzeichnet, dass** das Summiergetriebe ein Planetengetriebe (124) aufweist.

3. Antriebssystem nach Anspruch 1 oder 2, **dadurch gekennzeichnet, dass** eine Kupplung (138) vorgesehen ist, mittels welcher die mechanische Schnittstelle (62) mit dem Motor (22) und mit mindestens einer der beiden elektrischen Maschinen (28, 30) verbindbar ist.

4. Antriebssystem nach einem der Ansprüche 1 bis 3, **dadurch gekennzeichnet, dass** die mindestens eine Antriebsachse (14, 16) des Traktors (12) ausschließlich von der ersten und/oder der zweiten elektrischen Maschine (28, 30) antreibbar ist.

5. Antriebssystem nach einem der Ansprüche 1 bis 4, **dadurch gekennzeichnet, dass** ein mehrstufiges mechanisches Getriebe (32) mittels eines von der ersten und/oder der zweiten elektrischen Maschine (28, 30) erzeugten mechanischen Drehmoments antreibbar ist, wobei mittels des mehrstufigen mechanischen Getriebes (32) ein Drehmoment auf die mindestens eine Antriebsachse (14, 16) des Traktors (12) übertragbar ist.

6. Antriebssystem nach Anspruch 5, **dadurch gekennzeichnet, dass** das mehrstufige mechanische Getriebe (32) eine erste und eine zweite Eingangsschnittstelle (66,70) aufweist, wobei die erste elektrische Maschine (28) eine erste Abtriebswelle (66) aufweist, welche mit der ersten Eingangsschnittstelle (66) verbunden ist, und die zweite elektrische Maschine (30) eine zweite Abtriebswelle (70) aufweist, welche mit der zweiten Eingangsschnittstelle (70) verbunden ist.

7. Antriebssystem nach Anspruch 6, **dadurch gekennzeichnet, dass** die erste Abtriebswelle (66) der ersten elektrischen Maschine (28) mittels einer Kupplung (94) mit der zweiten Abtriebswelle (70) der zweiten elektrischen Maschine (30) kuppelbar ist.

8. Antriebssystem nach Anspruch 6 oder 7, **dadurch gekennzeichnet, dass** die erste und/oder die zweite Eingangsschnittstelle mit einer ersten und/oder einer zweiten Ausgangsschnittstelle (84, 102) des mehrstufigen mechanischen Getriebes (32) reversibel verbindbar ist, vorzugsweise mittels mindestens einer Kupplung (90, 92, 96, 116).

9. Antriebssystem nach einem der Ansprüche 5 bis 8, **dadurch gekennzeichnet, dass** das mehrstufige mechanische Getriebe (32) mindestens drei unterschiedliche Getriebeschaltstufen aufweist.

10. Antriebssystem nach einem der Ansprüche 1 bis 9, **dadurch gekennzeichnet, dass** ein erster und ein zweiter elektrischer Generator (24, 26) vorgesehen ist, wobei die beiden elektrischen Generatoren (24, 26) bezüglich des Motors (22) im Wesentlichen hintereinander angeordnet sind und jeweils einen mit der gleichen Welle (52) drehfest verbundenen Rotor (54, 56) aufweisen.

11. Antriebssystem nach Anspruch 10, **dadurch gekennzeichnet, dass** die Rotoren (58, 60) des ersten und des zweiten elektrischen Generators (24, 26) drehfest mit einer von dem Motor (22) angetriebenen Welle (52) verbunden sind.

12. Antriebssystem nach einem der Ansprüche 1 bis 11, **dadurch gekennzeichnet, dass** die beiden elektrischen Maschinen (28, 30) bezüglich des Motors (22) im Wesentlichen hintereinander angeordnet sind und jeweils einen mit einer Abtriebswelle (66, 70) drehfest verbundenen Rotor (64, 68) aufweisen.

13. Antriebssystem nach Anspruch 12, **dadurch gekennzeichnet, dass** die Abtriebswelle der einen elektrischen Maschine (30) eine Hohlwelle (70) aufweist, welche koaxial zur Abtriebswelle (66) der anderen elektrischen Maschine (28) angeordnet ist.

14. Traktor, umfassend ein Antriebssystem (10) nach einem der Ansprüche 1 bis 13.

## Claims

1. Drive system for a tractor, having at least one electrical generator (24, 26) which can be driven by a torque generated by an engine (22) of the tractor (12), and having a first and a second electrical machine (28, 30) which can be driven by the electrical energy generated by the at least one electrical generator (24, 26), wherein the mechanical torque generated by the first and/or the second electrical machine (28, 30) can be transmitted to at least one drive axle (14, 16) of the tractor (12), for propelling the latter, **characterized in that** a mechanical interface (62) in the form of a power take-off shaft (122, 152) is provided, via which a compound mechanical torque can be transmitted from the engine (22) and from at least one of the two electrical machines (28, 30) to a mechanically driveable implement by means of a compound gearing (124).

2. Drive system according to Claim 1, **characterized in that** the compound gearing has a planetary gear chain (124).

3. Drive system according to Claim 1 or 2, **characterized in that** a clutch (138) is provided, which serves to connect the mechanical interface (62) to the engine (22) and to at least one of the two electrical machines (28, 30).

4. Drive system according to one of Claims 1 to 3, **characterized in that** the at least one drive axle (14, 16) of the tractor (12) can be driven exclusively by the first and/or the second electrical machine (28, 30).

5. Drive system according to one of Claims 1 to 4, **characterized in that** a multistage mechanical transmission (32) can be driven by means of a mechanical torque generated by the first and/or the second electrical machine (28, 30), wherein a torque can be transmitted to the at least one drive axle (14, 16) of the tractor (12) by means of the multistage mechanical transmission (32).

6. Drive system according to Claim 5, **characterized in that** the multistage mechanical transmission (32) has a first and a second input interface (66, 70), wherein the first electrical machine (28) has a first output shaft (66), which is connected to the first input interface (66), and the second electrical machine (30) has a second output shaft (70), which is connected to the second input interface (70).

7. Drive system according to Claim 6, **characterized in that** the first output shaft (66) of the first electrical machine (28) can be coupled by means of a clutch (94) to the second output shaft (70) of the second electrical machine (30).

8. Drive system according to Claim 6 or 7, **characterized in that** the first and/or the second input interface can be reversibly connected to a first and/or a second output interface (84, 102) of the multistage mechanical transmission (32), preferably by means of at least one clutch (90, 92, 96, 116).

9. Drive system according to one of Claims 5 to 8, **characterized in that** the multistage mechanical transmission (32) has at least three different transmission shift stages.

10. Drive system according to one of Claims 1 to 9, **characterized in that** a first and a second electrical generator (24, 26) are provided, wherein the two electrical generators (24, 26) are arranged substantially in series relative to the engine (22) and each have a rotor (54, 56) which is rotationally locked to the same shaft (52).

11. Drive system according to Claim 10, **characterized in that** the rotors (58, 60) of the first and the second electrical generator (24, 26) are rotationally locked to a shaft (52) driven by the engine (22).

12. Drive system according to one of Claims 1 to 11, **characterized in that** the two electrical machines (28, 30) are arranged substantially in series relative to the engine (22) and each have a rotor (64, 68) which is rotationally locked to an output shaft (66, 70).

13. Drive system according to Claim 12, **characterized in that** the output shaft of the one electrical machine (30) has a hollow shaft (70), which is arranged coaxially with the output shaft (66) of the other electrical machine (28).

14. Tractor comprising a drive system (10) according to one of Claims 1 to 13.

## Revendications

1. Système d'entraînement pour un tracteur, comprenant au moins un générateur électrique (24, 26) qui peut être entraîné au moyen d'un couple généré par le moteur (22) du tracteur (12) et comprenant une première et une deuxième machine électrique (28, 30) qui peut être entraînée par l'énergie électrique générée par l'au moins un générateur électrique (24, 26), le couple mécanique généré par la première et/ou la deuxième machine électrique (28, 30) pouvant être transmis à au moins un essieu d'entraînement (14, 16) du tracteur (12) en vue de son déplacement d'avance, **caractérisé en ce qu'**une interface mécanique (62) réalisée sous la forme d'un arbre de prise de force (122, 152) est prévue, par le biais de laquelle un couple mécanique peut être transmis par le moteur (22) et par au moins l'une des deux machines électriques (28, 30) sous forme additionnée au moyen d'un engrenage sommateur (124) à un engin de travail pouvant être entraîné mécaniquement.

2. Système d'entraînement selon la revendication 1, **caractérisé en ce que** l'engrenage sommateur présente un engrenage planétaire (124).

3. Système d'entraînement selon la revendication 1 ou 2, **caractérisé en ce qu'**un embrayage (138) est prévu, au moyen duquel l'interface mécanique (62) peut être connectée au moteur (22) et à au moins l'une des deux machines électriques (28, 30).

4. Système d'entraînement selon l'une quelconque des revendications 1 à 3, **caractérisé en ce que** l'au moins un essieu d'entraînement (14, 16) du tracteur (12) peut être entraîné exclusivement par la première et/ou la deuxième machine électrique (28, 30).

5. Système d'entraînement selon l'une quelconque des revendications 1 à 4, **caractérisé en ce qu'**une transmission mécanique multi-étagée (32) peut être entraînée au moyen d'un couple mécanique généré par la première et/ou la deuxième machine électrique (28, 30), un couple pouvant être transmis au moyen de la transmission mécanique multi-étagée (32) à l'au moins un essieu d'entraînement (14, 16) du tracteur (12).

6. Système d'entraînement selon la revendication 5, **caractérisé en ce que** la transmission mécanique multi-étagée (32) présente une première et une deuxième interface d'entrée (66, 70), la première machine électrique (28) présentant un premier arbre de sortie (66) qui est connecté à la première interface d'entrée (66) et la deuxième machine électrique (30) présentant un deuxième arbre de sortie (70) qui est connecté à la deuxième interface d'entrée (70).

7. Système d'entraînement selon la revendication 6, **caractérisé en ce que** le premier arbre de sortie (66) de la première machine électrique (28) peut être accouplé au moyen d'un embrayage (94) au deuxième arbre de sortie (70) de la deuxième machine électrique (30).

8. Système d'entraînement selon la revendication 6 ou 7, **caractérisé en ce que** la première et/ou la deuxième interface d'entrée peut être connectée de manière réversible à une première et/ou une deuxième interface de sortie (84, 102) de la transmission mécanique multi-étagée (32), de préférence au moyen d'au moins un embrayage (90, 92, 96, 116).

9. Système d'entraînement selon l'une quelconque des revendications 5 à 8, **caractérisé en ce que** la transmission mécanique multi-étagée (32) présente au moins trois étages de changement de vitesses différents.

10. Système d'entraînement selon l'une quelconque des revendications 1 à 9, **caractérisé en ce qu'**un premier et un deuxième générateur électrique (24, 26) sont prévus, les deux générateurs électriques (24, 26) étant disposés sensiblement l'un derrière l'autre par rapport au moteur (22) et présentant à chaque fois un rotor (54, 56) connecté de manière solidaire en rotation au même arbre (52).

11. Système d'entraînement selon la revendication 10, **caractérisé en ce que** les rotors (58, 60) du premier et du deuxième générateur électrique (24, 26) sont connectés de manière solidaire en rotation à un arbre (52) entraîné par le moteur (22).

12. Système d'entraînement selon l'une quelconque des revendications 1 à 11, **caractérisé en ce que** les deux machines électriques (28, 30) sont disposées sensiblement l'une derrière l'autre par rapport au moteur (22) et présentent à chaque fois un rotor (64, 68) connecté de manière solidaire en rotation à un arbre de sortie (66, 70).

13. Système d'entraînement selon la revendication 12, **caractérisé en ce que** l'arbre de sortie de l'une des machines électriques (30) présente un arbre creux (70) qui est disposé coaxialement par rapport à l'arbre de sortie (66) de l'autre machine électrique (28).

14. Tracteur comprenant un système d'entraînement (10) selon l'une quelconque des revendications 1 à 13.
